# EUROPEAN PATENT APPLICATION

(11) **EP 4 835 153 A1**
(43) Date of publication of application: **04.11.2026**
(21) Application number: 24913083.2
(22) Date of filing: 27.12.2024
(51) Int. Cl.: C25B 11/052, C25B 9/00, C25B 11/00, C25B 11/061, C25B 11/089

(54) **CATHODE FOR WATER ELECTROLYSIS AND METHOD FOR PRODUCING CATHODE FOR WATER ELECTROLYSIS**

(30) Priority: 28.12.2023 JP 2023222351
(71) Applicant: KABUSHIKI KAISHA TOYOTA JIDOSHOKKI, Kariya-shi, Aichi 448-8671 (JP)
(72) Inventor: SHIRAI, Keisuke, Kariya-shi, Aichi 448-8671 (JP); KONO, Satoshi, Kariya-shi, Aichi 448-8671 (JP); OKANISHI, Takeo, Kariya-shi, Aichi 448-8671 (JP); YASUDA, Shuichi, Kariya-shi, Aichi 448-8671 (JP); FUJII, Kairi, Kariya-shi, Aichi 448-8671 (JP); HONDA, Masaki, Kariya-shi, Aichi 448-8671 (JP)
(74) Representative: TBK
(86) International application number: PCT/JP2024/046343
(87) International publication number: WO 2025/143197

(57) **Abstract**

A water electrolysis cathode includes a catalyst portion and a reverse current absorber electrically connected to the catalyst portion, the reverse current absorber contains a hydrogen storage alloy, and the hydrogen storage alloy contains Al.

## Description

### TECHNICAL FIELD

The present disclosure relates to a water electrolysis cathode and a method for manufacturing the water electrolysis cathode.

### BACKGROUND ART

Water electrolysis is a process of electrolyzing water into hydrogen and oxygen, and used, for example, as a technology for producing hydrogen. A water electrolysis apparatus for generating hydrogen includes, for example, an electrolytic cell in which an electrolyte solution such as alkaline water is contained, and an anode and a cathode arranged in the electrolytic cell with a separator interposed therebetween. In the water electrolysis apparatus, current is caused to flow between the anode and the cathode, which causes oxygen to be generated at the anode and hydrogen to be generated at the cathode.

It is known that reverse current (electric current in the opposite direction to electrolysis current) is generated when the water electrolysis apparatus is stopped, and the reverse current causes, for example, degradation of electrodes, particularly the cathode. Examples of the solution for preventing degradation of the electrodes include: to use an electrode that does not undergo oxidation-induced degradation even when reverse current flows, to prevent an electrode catalyst from rising to a potential at which oxidation-induced degradation occurs, and the like.

WO2018/168863 (PTL 1) discloses that degradation of a cathode is prevented by using, as a reverse current absorber, a material having an oxidation- reduction potential less noble than that of a catalytic element of the cathode.

Japanese Patent Laying-Open No. 2001-234380 (PTL 2) discloses that an increase in potential of an electrode is suppressed by using an electrode formed of a sintered material produced by coating a substrate with a coating liquid containing a metal such as molybdenum and a metal such as nickel, drying the coating liquid, and then performing heat treatment.

### CITATION LIST

### PATENT LITERATURE

PTL 1: WO2018/168863
PTL 2: Japanese Patent Laying-Open No. 2001-234380

### SUMMARY OF INVENTION

### TECHNICAL PROBLEM

As disclosed in PTL 1 and PTL 2, various technologies have been proposed for the purpose of preventing degradation of electrodes due to reverse current. However, such technologies still have room for improvement.

An object of the present disclosure is to provide a water electrolysis cathode of which degradation due to reverse current is suppressed, and a method for manufacturing the water electrolysis cathode.

### SOLUTION TO PROBLEM

A water electrolysis cathode for solving the above problem includes a catalyst portion and a reverse current absorber electrically connected to the catalyst portion, the reverse current absorber contains a hydrogen storage alloy, and the hydrogen storage alloy contains Al.

The water electrolysis cathode includes the reverse current absorber as a sacrificial electrode. The reverse current absorber contains the hydrogen storage alloy containing Al. The hydrogen storage alloy is an alloy of Metal A that is easy to react with hydrogen but lower in hydrogen release capacity, and Metal B that is not easy to react with hydrogen but higher in hydrogen release capacity. Since the hydrogen storage alloy contains Al as Metal B, it is expected that degradation due to reverse current is suppressed.

A method for manufacturing a water electrolysis cathode includes: a catalyst portion forming step of forming a catalyst portion; and a reverse current absorber forming step of forming a reverse current absorber that contains a hydrogen storage alloy containing Al, and the reverse current absorber forming step includes a hydrogen storage alloy coating step of coating a substrate with a slurry obtained by mixing the hydrogen storage alloy and a solvent.

### ADVANTAGEOUS EFFECTS OF INVENTION

According to the present disclosure, a water electrolysis cathode of which degradation due to reverse current is suppressed is obtained.

### BRIEF DESCRIPTION OF DRAWINGS

[Fig. 1] Fig. 1 is a schematic diagram showing an example of a water electrolysis apparatus including a water electrolysis cathode of the present disclosure.
[Fig. 2] Fig. 2 is a schematic diagram showing another example of the water electrolysis apparatus including the water electrolysis cathode of the present disclosure.
[Fig. 3] Fig. 3 is a schematic diagram showing another example of the water electrolysis apparatus including the water electrolysis cathode of the present disclosure.
[Fig. 4] Fig. 4 is a schematic diagram showing another example of the water electrolysis apparatus including the water electrolysis cathode of the present disclosure.
[Fig. 5] Fig. 5 is a schematic diagram showing another example of the water electrolysis apparatus including the water electrolysis cathode of the present disclosure.
[Fig. 6] Fig. 6 is a schematic diagram showing a configuration of a water electrolysis apparatus in Example 2.
[Fig. 7] Fig. 7 is a schematic diagram showing another configuration of the water electrolysis apparatus in Example 2.
[Fig. 8] Fig. 8 is a bar graph showing experimental results in Example 2.
[Fig. 9] Fig. 9 is a graph showing results of evaluation of activity of water electrolysis electrodes in Reference Test 1.
[Fig. 10] Fig. 10 is a graph showing results of evaluation of durability of the water electrolysis electrodes in Reference Test 1.

### DESCRIPTION OF EMBODIMENTS

In the following, an embodiment(s) of the present disclosure (may be abbreviated as "the present embodiment" hereinafter) and an example(s) of the present disclosure (may be abbreviated as "the present example" hereinafter) are described. It should be noted that the present embodiment and the present example do not limit the technical scope of the present disclosure.

A water electrolysis cathode of the present embodiment is used as a cathode for electrolysis in a water electrolysis apparatus. The water electrolysis cathode of the present embodiment is used suitably in an alkaline water electrolysis apparatus.

The average particle size of a Raney alloy refers to a particle size at a cumulative value of 50% in a particle size distribution determined by the laser diffraction and scattering method. The average particle size of a raw material for metal particles refers to a particle size measured by the Fisher method. The average particle size of Raney nickel particles and the average particle size of the metal particles refer to respective arithmetic averages of the minor axis size of any 100 Raney nickel particles and any 100 metal particles, respectively, extracted from SEM images obtained by means of a scanning electron microscope (SEM).

### <Water Electrolysis Cathode>

The water electrolysis cathode of the present embodiment includes a catalyst portion and a reverse current absorber electrically connected to the catalyst portion. The reverse current absorber contains a hydrogen storage alloy. The hydrogen storage alloy contains aluminum (Al). The catalyst portion includes a substrate and a catalyst.

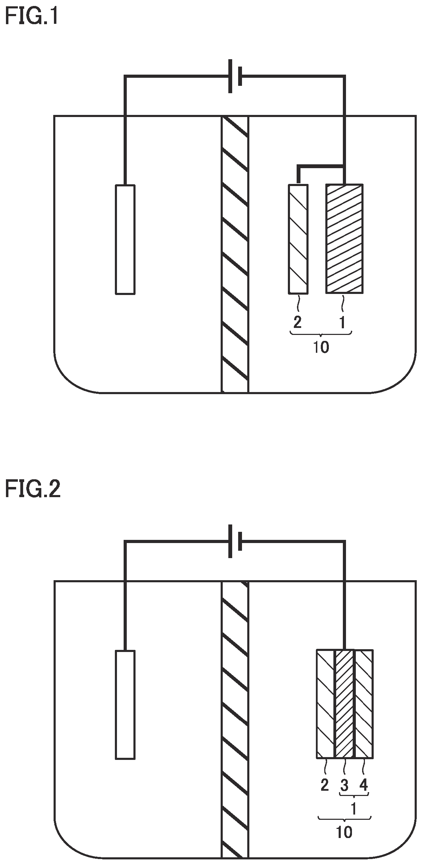

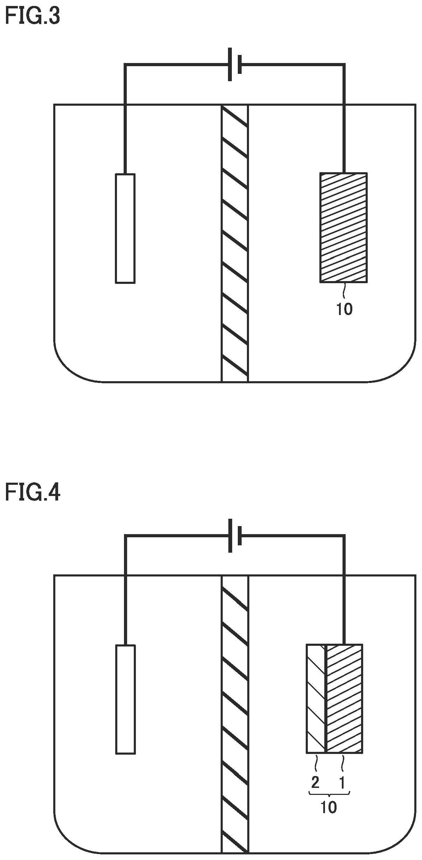

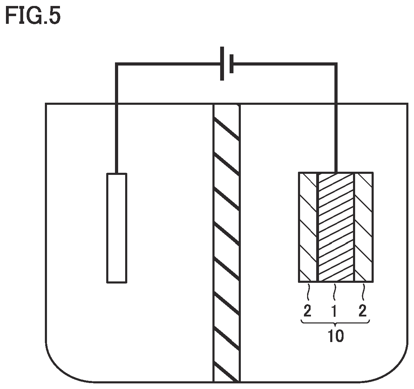

It is at least required for the water electrolysis cathode of the present embodiment that the potential of the catalyst portion is equal to the potential of the reverse current absorber. That is, as long as the catalyst portion and the reverse current absorber are electrically connected to each other, there is no particular limitation on its configuration. For example, as shown in Fig. 1, it may be a water electrolysis cathode 10 (hereinafter also referred to as "first form") in which a catalyst portion 1 and a reverse current absorber 2 are provided separately. For example, as shown in Fig. 2, it may be a water electrolysis cathode 10 (hereinafter also referred to as "second form") in which a catalyst layer 4 including a catalyst is formed on one of the front and rear surfaces of a substrate 3, and a reverse current absorber 2 is formed on the other surface. For example, as shown in Fig. 3, it may be a water electrolysis cathode 10 (hereinafter also referred to as "third form") in which a catalyst and a reverse current absorber are dispersed in a substrate. For example, as shown in Fig. 4, it may be a water electrolysis cathode 10 in which a reverse current absorber 2 is formed on one of the front and rear surfaces of a catalyst portion 1, and it may be, as shown in Fig. 5, a water electrolysis cathode 10 in which a reverse current absorber 2 is formed on both the front and rear surfaces of a catalyst portion 1 (hereinafter, the water electrolysis cathodes 10 shown in Fig. 4 and Fig. 5 are also referred to as "fourth form"). Moreover, as described later herein in connection with a method for manufacture, the catalyst portion 1 of the present embodiment is obtained by coating a substrate with a slurry containing a raw material for a catalyst, and the reverse current absorber 2 of the present embodiment is obtained by coating a substrate with a slurry that contains a hydrogen storage alloy containing Al.

### <<Substrate>>

The substrate of the present embodiment is an electrical conductor that allows electricity to flow therethrough. The substrate is not particularly limited as long as it has electrical conductivity, and examples thereof include metals containing Ni, such as nickel metal and nickel alloys. The entire substrate may be formed of nickel metal or a nickel alloy, or only the surface of the substrate may be formed of nickel metal or a nickel alloy. In the substrate in which only the surface is formed of nickel metal or a nickel alloy, the surface of a metal material such as iron or stainless steel may be coated with the nickel metal or the nickel alloy. The substrate preferably contains nickel metal or a nickel alloy as a main component. The substrate is preferably made of nickel metal having a higher Ni purity for the sake of durability against the environment in which the substrate is used. It should be noted that "containing nickel metal or a nickel alloy as a main component" means that the Ni content in the nickel metal or the nickel alloy in the substrate is more than 50% by mass.

The shape of the substrate is not particularly limited, and may be porous or non-porous. Examples of the shape of the porous substrate include punched metal, mesh, foam metal, expanded metal, and the like. Examples of the shape of the non-porous substrate include a sheet shape and the like.

The thickness of the substrate is not particularly limited, and may be a thickness suitable for a water electrolysis apparatus to be used.

### <<Catalyst>>

The catalyst of the present embodiment contains a metal. Examples of the metal include aluminum (Al), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), ruthenium (Ru), rhodium (Rh), palladium (Pd), silver (Ag), cadmium (Cd), indium (In), tin (Sn), tantalum (Ta), tungsten (W), rhenium (Re), osmium (Os), iridium (Ir), platinum (Pt), gold (Au), mercury (Hg), lead (Pb), bismuth (Bi), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and the like. The catalyst of the present embodiment may contain oxides, hydroxides, nitrides, phosphides, sulfides, carbides, borides, and the like of these metals. The catalyst of the present embodiment may contain a plurality of metals.

The catalyst of the present embodiment preferably contains the same metal as the substrate. In this way, the affinity between the substrate and the catalyst is improved to suppress falling off of the catalyst from the substrate, and accordingly, it is expected that the durability against reverse current is increased. From such a viewpoint, the catalyst of the present embodiment preferably contains Ni.

### (Raney Nickel Particles)

The catalyst of the present embodiment may include Raney nickel particles. The Raney nickel particles contain Ni and Al. The Raney nickel particles are each a porous body having many pores formed therein and having a large specific surface area, and exhibit high activity.

A ratio of the total number of moles of Al to the total number of moles of Ni in the Raney nickel particles (hereinafter also referred to as "first Al/Ni ratio") is 1 or less, preferably 0.6 or less. From the fact that the first Al/Ni ratio is 1 or less, it is expected that the activity is improved. The first Al/Ni ratio may be, for example, 0.005 or more, or 0.01 or more. The first Al/Ni ratio can be identified, for example, by scanning electron microscopy-energy dispersive X-ray spectroscopy (SEM-EDX).

The Raney nickel particles may contain a first metal other than Ni and Al. From the fact that the Raney nickel particles contain the first metal, it is expected that the activity is further improved. Examples of such a first metal include magnesium (Mg), silicon (Si), Ti, Cr, Mn, Fe, Co, Cu, Ag, Pt, Au, and the like. The proportion of the first metal contained in the Raney nickel particles is equal to the proportion of the first metal contained in the raw material for the Raney nickel particles (the raw material is also referred to as "Raney alloy" hereinafter). In the Raney nickel particles containing the first metal, the molar ratio between Ni and the first metal may be, for example, 1.99:0.01 to 1.15:1.85. The molar ratio between Ni and the first metal is preferably 1.99:0.05 to 1.5:0.5.

The Raney nickel particles may be an alloy composed of a single phase or an alloy composed of a plurality of phases. Examples of such a phase(s) include a phase composed of only Ni, a phase composed of Ni and Al, a phase composed of Ni and the first metal, a phase composed of Ni, Al, and the first metal, and the like. The phase(s) constituting the Raney nickel particles and the composition thereof can be identified, for example, by SEM-EDX.

The BET specific surface area of the Raney nickel particles is, for example, 0.05 m²/g or more and 100 m²/g or less. It should be noted that the BET specific surface area refers to the surface area per unit mass of the Raney nickel particles measured with N₂ adsorption by the BET method.

The average particle size (D50) of the Raney nickel particles is, for example, 5 µm or more and 100 µm or less. When the average particle size of the Raney nickel particles is 5 µm or more and 100 µm or less, improvement in the activity and the durability is expected. The average particle size of the Raney nickel particles may be 8 µm or more and 85 µm or less, 10 µm or more and 50 µm or less, 10 µm or more and 30 µm or less, or 15 µm or more and 30 µm or less.

### [Method for Manufacturing Raney Nickel Particles]

Raney nickel particles are generally obtained by treating a Raney alloy containing Ni and a metal element soluble in alkali with an alkaline substance to elute the metal element soluble in alkali from the Raney alloy. The metal element soluble in alkali is preferably a metal element having a higher ionization tendency than Ni. Examples of the metal element soluble in alkali include amphoteric metals (Al, Zn, Sn, and Pb) and the like.

The Raney nickel particles are obtained by treating a Raney alloy containing Ni and Al with an alkaline substance to elute Al from the Raney alloy. The Raney alloy may contain the first metal.

A specific treatment method includes, for example, placing the Raney alloy (substrate including the Raney alloy) in an alkaline aqueous solution containing an alkaline substance, and thereafter stirring them for a predetermined time at a predetermined temperature of the alkaline aqueous solution. Examples of the alkaline substance include alkali metal hydroxides, alkali metal salts, and the like. Examples of the alkali metal hydroxides include sodium hydroxide, potassium hydroxide, lithium hydroxide, and the like. Examples of the alkali metal salts include sodium carbonate, potassium carbonate, lithium carbonate, and the like. The alkaline substance is preferably an alkali metal hydroxide.

The treatment temperature is, for example, 100°C or more and 140°C or less. The treatment time is, for example, 1 hour or more and 9 hours or less. The amount of the alkaline substance used in this step may be adjusted as appropriate.

The Raney alloy is preferably treated at a high temperature using a high-concentration alkaline aqueous solution of an alkali metal hydroxide. The concentration of the alkaline aqueous solution is, for example, 3 mol/L or more, preferably 7 mol/L or more, and more preferably 14 mol/L or more. The concentration of the alkaline aqueous solution is 20 mol/L or less. The treatment temperature is, for example, 100°C or more, preferably 110°C or more, and more preferably 125°C or more. The treatment temperature is, for example, 148°C or less. It should be noted that in order to increase the treatment temperature, it is necessary to increase the concentration of the alkaline aqueous solution to make the boiling point of the alkaline aqueous solution equal to or higher than the treatment temperature. For example, when the treatment temperature is 100°C or more, the concentration of the alkaline aqueous solution is preferably 3 mol/L or more and, when the treatment temperature is 125°C or more, the concentration of the alkaline aqueous solution is preferably 14 mol/L or more. Moreover, this step is preferably performed under normal pressure. In this case, hydrogen generated during the treatment can be easily removed as compared with the case where pressure is applied.

Under such conditions, it is possible to shorten the time for reaction between the alkaline aqueous solution and the Raney alloy. The time for reaction is, for example, 3 hours or more and 9 hours or less when the concentration of the alkaline aqueous solution is 3 mol/L or more and the treatment temperature is 100°C or more, and is, for example, 1 hour or more and 8 hours or less when the concentration of the alkaline aqueous solution is 14 mol/L or more and the treatment temperature is 125°C or more.

It should be noted that all Al contained in the Raney alloy may be eluted, or a part of Al may be allowed to remain without being eluted.

If the proportion of Al in the Raney alloy containing Ni and Al is high, the voidage of the Raney nickel particles obtained by eluting Al is high, that is, the specific surface area is large. Therefore, from the viewpoint of obtaining Raney nickel particles exhibiting higher activity, it is preferable to use a Raney alloy having a high proportion of Al.

In contrast, if the proportion of Al in the Raney alloy containing Ni and Al is low, the voidage of the Raney nickel particles obtained by eluting Al is low, that is, the specific surface area is small. Therefore, from the viewpoint of obtaining Raney nickel particles having high durability (strength), it is preferable to use a Raney alloy having a low proportion of Al.

Thus, from the viewpoint of obtaining Raney nickel particles exhibiting high activity while maintaining durability, the number of moles of Al contained in the Raney alloy is preferably larger than the number of moles of Ni contained in the Raney alloy. From such a viewpoint, it is preferable to use a Raney alloy represented by the following Formula (2).

Al₃Ni₍₂₋ₓ₎₎Mₓ (2)

In the above Formula (2), M is at least one element selected from Mg, Si, Ti, Cr, Mn, Fe, Co, Cu, Ag, Pt, and Au, and x satisfies a relationship: 0 ≤ x ≤ 0.2.

The element M is preferably at least one element selected from Fe and Co. This is because reduction in the amount used and reduction in the cost are expected, in addition to improvement in the activity. More preferably, the element M includes at least Fe. From such a viewpoint, it is more preferable to use a Raney alloy represented by the following Formula (3).

Al₃Ni_{(2-(y+z))}Fe_{y}Co_{z} (3)

In the above Formula (3), y and z satisfy a relationship: 0 ≤ y ≤ 0.1 and 0 ≤ z ≤ 0.1.

The Raney alloy is, for example, in a powder form. The average particle size of the Raney alloy is, for example, 5 µm or more and 100 µm or less. When the average particle size of the Raney nickel particles is 5 µm or more and 100 µm or less, improvement in the activity and the durability is expected. The average particle size of the Raney nickel particles may be 8 µm or more and 85 µm or less, 10 µm or more and 50 µm or less, 10 µm or more and 30 µm or less, or 15 µm or more and 30 µm or less.

The method for manufacturing the Raney alloy is not particularly limited, and a known method for manufacturing an alloy can be applied. Examples of the method for manufacturing the Raney alloy include casting method, rapid cooling method, mechanical alloying method, sputtering method, and the like.

### (Metal Particles)

Since the affinity between the substrate and the catalyst is improved to suppress falling off of the catalyst from the substrate, it is accordingly expected that the durability against reverse current is improved. From such a viewpoint, the catalyst of the present embodiment may further include metal particles containing Ni as a main component (hereinafter also referred to simply as "metal particles") in addition to the Raney nickel particles. The metal particles are in contact with the Raney nickel particles. Preferably, the metal particles are each in contact with more than one of the Raney nickel particles. The metal particles have a function of a binder that binds Raney nickel particles dispersed in the catalyst to each other or binds the Raney nickel particles to the substrate. This function is explained as follows. It should be noted that "containing Ni as a main component" means that the Ni content in the metal particles is more than 50% by mass.

When the Raney alloy (Raney nickel particles) and the metal particles contain a metal other than Ni (hereinafter also referred to as "first additive element") and thermal energy is applied to them, impurity diffusion occurs where the first additive element is regarded as an impurity. That is, when thermal energy from firing or the like is applied to cause thermal oscillation of atoms of the first additive element, the first additive element diffuses from the Raney alloy into a raw material for the metal particles (or from the Raney nickel particles into the metal particles), due to a concentration gradient of the first additive element between the Raney alloy and the raw material for the metal particles (or between the Raney nickel particles and the metal particles). Therefore, even for different types of substances such as the metal particles and the Raney nickel particles (or the Raney alloy and the raw material for the metal particles), the Raney alloy and the raw material for the metal particles (or the Raney nickel particles and the metal particles) are bound by the surface diffusion of the first additive element if they are in contact with each other. Accordingly, the surface area of the catalyst is improved, and improvement in the activity of the water electrolysis cathode is expected. Moreover, since the Raney alloy and the raw material for the metal particles (or the Raney nickel particles and the metal particles) are strongly bound together, their falling off from the substrate is suppressed, and accordingly, improvement in the durability of the water electrolysis cathode is also expected.

The metal particles may contain Al. That is, in the present embodiment, the concentration gradient of Al serves as a driving force to cause Al atoms to diffuse from the Raney nickel particles, which have a larger amount of Al than the metal particles (or the raw material for the metal particles), into the metal particles (or from the Raney alloy into the raw material for the metal particles). Since the metal particles (or the raw material for the metal particles) contain Al, the function of the metal particles as a binder is improved, and accordingly, a stronger electron conduction path is formed, and further improvement in the activity of the water electrolysis cathode is expected. Moreover, since the Raney nickel particles and the metal particles (or the Raney alloy and the raw material for the metal particles) are more strongly bound, improvement in the durability of the water electrolysis cathode is also expected.

A ratio of the total number of moles of Al to the total number of moles of Ni in the metal particles of the present embodiment (hereinafter also referred to as "second Al/Ni ratio") is 0.4 or less, preferably 0.35 or less. From the fact that the second Al/Ni ratio is 0.4 or less, improvement in the activity is expected. The second Al/Ni ratio may be, for example, 0.005 or more, or 0.01 or more. The second Al/Ni ratio can be identified, for example, by SEM-EDX.

The first Al/Ni ratio is preferably larger than the second Al/Ni ratio. That is, the number of moles of Al contained in the Raney nickel particles is preferably larger than the number of moles of Al contained in the metal particles. As a result of the improvement in the function of the metal particles as a binder, a stronger electron conduction path is formed, and further improvement in the activity of the water electrolysis cathode is expected. Moreover, since the Raney nickel particles and the metal particles are more strongly bound together, improvement in the durability of the water electrolysis cathode is also expected.

The metal particles preferably contain Al in their surfaces. From the fact that Al is contained in the surfaces of the metal particles, it is expected that the function of the metal particles as a binder for binding the Raney nickel particles to each other or for binding the Raney nickel particles to the substrate is further improved.

The average particle size of the metal particles is preferably smaller than the average particle size of the Raney nickel particles. When the average particle size of the metal particles is smaller than the average particle size of the Raney nickel particles, the metal particles can enter gaps between the Raney nickel particles. As a result, the metal particles and the Raney nickel particles can be in denser contact with each other, and the function of the metal particles as a binder is expected to be further improved. The average particle size of the metal particles may be one-fifth or less, or one-tenth or less of the average particle size of the Raney nickel particles. The average particle size of the metal particles is 1 µm or more and 10 µm. The average particle size of the metal particles may be 1 µm or more and 5 µm or less, 1.5 µm or more and 3.5 µm or less, or 2 µm or more and 3 µm or less. The average particle size of the metal particles is preferably 2 µm or more and 3 µm or less. When the average particle size of the metal particles is 2 µm or more and 3 µm or less, improvement in the durability is expected. It should be noted that in some cases, the metal particles are bonded to each other and accordingly the average particle size of the metal particles becomes larger than the average particle size of the Raney nickel particles.

### (Method for Manufacturing Catalyst Including Raney Nickel Particles and Metal Particles)

A catalyst including Raney nickel particles and metal particles is obtained by firing a mixture containing a Raney alloy and a raw material for metal particles containing Ni as a main component (a substrate containing the Raney alloy and the raw material for metal particles) and treating it with an alkaline substance. It should be noted that the treatment with the alkaline substance is the same as the one for the method for manufacturing Raney nickel particles described above, and therefore, the description thereof is not herein repeated.

The firing temperature may be, for example, 600°C or more and 900°C or less. The firing time may be, for example, 1 hour or more and 24 hours or less.

The number of moles of Al in the raw material for the metal particles is preferably smaller than the number of moles of Al in the Raney alloy. When the number of moles of Al in the raw material for the metal particles is smaller than the number of moles of Al in the Raney alloy, Al diffuses from the Raney alloy into the raw material for the metal particles because of the concentration gradient during firing to accordingly form the metal particles and, as a result, a stronger electron conduction path is formed, and further improvement in the activity and the durability of the catalyst is expected.

The raw material for the metal particles may be substantially composed of Ni. Since Ni is an alkali-resistant metal, it does not corrode even during use, and accordingly, further improvement in the activity and the durability of the electrode for electrolysis is expected. It should be noted that "substantially composed of Ni" means that the Ni content in the metal particles is 95% by mass or more.

The raw material for the metal particles is, for example, in a powder form. The average particle size of the raw material for the metal particles is preferably smaller than the average particle size of the Raney alloy. When the average particle size of the metal particles is smaller than the average particle size of the Raney alloy, it is expected that the function of the metal particles as a binder is further improved. The average particle size of the metal particles may be one-fifth or less, or one-tenth or less of the average particle size of the Raney nickel particles. The average particle size of the metal particles may be 1 µm or more and 10 µm, 1 µm or more and 5 µm or less, 1.5 µm or more and 3.5 µm or less, or 2 µm or more and 3 µm or less. The average particle size of the metal particles is preferably 2 µm or more and 3 µm or less. When the average particle size of the metal particles is 2 µm or more and 3 µm or less, improvement in the durability is expected.

### <<Reverse Current Absorber>>

The reverse current absorber of the present embodiment contains a hydrogen storage alloy. The hydrogen storage alloy contains Al. The reverse current absorber may be composed of the hydrogen storage alloy. Basically, the hydrogen storage alloy is an alloy of Metal A that is easy to react with hydrogen but lower in hydrogen release capacity, and Metal B that is not easy to react with hydrogen but higher in hydrogen release capacity. Examples of A include group 2 elements such as Mg, group 3 elements such as scandium (Sc) and lanthanoids, group 4 elements such as Ti and Zr, group 5 elements such as V and Ta, misch metal (may be abbreviated as Mm hereinafter) containing a plurality of rare earth elements, Pd, and the like. B is at least required to contain Al, and examples of elements other than Al to be contained in B include Fe, Co, Ni, Cr, Pt, Cu, Ag, Mn, Zn, and the like.

The hydrogen storage alloy of the present embodiment is at least required to be an alloy containing Al, and its composition ratio and other elements that the hydrogen storage alloy can contain are not particularly limited. Examples thereof include La(Mn)-Ni-Al alloys, La(Mn)-Mn-Al alloys, La(Mn)-Ni-Al-Mn alloys, La(Mn)-Ni-Al-Zr alloys, La(Mn)-Ni-Al-Co alloys, La(Mn)-Ni-Al-Mn-Co alloys, La(Mn)-Ni-Al-Te alloys, La(Mn)-Ni-Al-Te-Co alloys, and the like. Specifically, the examples thereof include LaNi_{4.3}Al_{0.7}, MmNi_{4.5}Al_{0.5}, MmNi_{4.5}Al_{0.25}Co_{0.25}, MmNi_{4.5}Al_{0.25}Mn_{0.25}, MmNi_{3.55}Mn_{0.4}Al_{0.3}Co_{0.75}, La_{0.77}Mg_{0.23}Ni_{3.3}Al_{0.1}, and the like.

The hydrogen storage alloy of the present embodiment preferably contains La and Ni, and more preferably contains Mg in addition to La and Ni. More specifically, the hydrogen storage alloy containing La, Mg, Ni, and Al is at least required to be an alloy containing La, Mg, Ni, and Al, and its composition ratio and other elements that the hydrogen storage alloy can contain are not particularly limited. Examples of the hydrogen storage alloy containing La, Mg, Ni, and Al include those represented by the following Formula (1).

(La₁₋ₐMₐ)_{1-b}Mg_{b}Ni_{c}Al_{d}Tₑ (1)

In the above Formula (1), M is at least one element selected from Ce, Pr, Nd, Pm, Sm, Eu, Gd, Tb, Dy, Ho, Er, Tm, Yb, Lu, calcium (Ca), strontium (Sr), Sc, Y, Ti, Zr, and Hf, and T is at least one element selected from Mn, Co, Ti, V, Nb, W, Ta, Cr, Mo, Fe, Al, gallium (Ga), Zn, Sn, In, Cu, Si, lithium (Li), phosphorus (P), sulfur (S), and boron (B), and a, b, c, d, and e satisfy relationships: 0 ≤ a ≤ 0.1, 0 < b < 0.3, 2.5 ≤ c ≤ 4.7, 0 < d ≤ 0.1, and 0 ≤ e ≤ 0.01, respectively. Preferably, c satisfies a relationship: 2.5 ≤ c ≤ 3.7.

Specifically, examples of the hydrogen storage alloy satisfying the above Formula (1) include LaNi_{4.3}Al_{0.7}, LaNi_{4.5}Al_{0.25}Co_{0.25}, LaNi_{4.5}Al_{0.25}Mn_{0.25}, LaNi_{3.55}Mn_{0.4}Al_{0.3}Co_{0.75}, La_{0.77}Mg_{0.23}Ni_{3.3}Al_{0.1}, and the like.

A reason why such a hydrogen storage alloy is preferable is that the affinity between the substrate and the reverse current absorber (hydrogen storage alloy) is improved to suppress falling off of the hydrogen storage alloy from the substrate, and accordingly, it is expected that the durability against reverse current is increased. Moreover, when the hydrogen storage alloy contains a metal element such as Al or La (hereinafter also referred to as "second additive element") that is more easily diffused than a metal element that is a main component of the substrate and thermal energy is applied to them, impurity diffusion occurs where the second additive element is regarded as an impurity. That is, when thermal energy from firing or the like is applied to cause thermal oscillation of atoms of the second additive element, the second additive element diffuses from the hydrogen storage alloy into the substrate due to a concentration gradient of the second additive element between the hydrogen storage alloy and the substrate. Therefore, even for different types of substances such as the hydrogen storage alloy and the substrate, the hydrogen storage alloy and the substrate are bound by the surface diffusion of the second additive element if they are in contact with each other. Since the hydrogen storage alloy and the substrate are strongly bound together, its falling off from the substrate is suppressed, and accordingly, improvement in the durability of the water electrolysis cathode is also expected. That is, in the present embodiment, the concentration gradient of Al serves as a driving force to cause Al atoms to diffuse from the hydrogen storage alloy, which has a larger amount of Al, into the substrate, which has Ni as a main component, so that they are bound together more strongly, and therefore, improvement in the durability of the water electrolysis cathode is also expected.

The number of moles of La and Ni contained in the hydrogen storage alloy is preferably larger than the number of moles of Al. In this case, in the hydrogen storage alloy, the Al element is more easily diffused than the La and Ni elements, so that the second additive element is more easily diffused from the hydrogen storage alloy into the substrate.

Examples of the crystal structure of the hydrogen storage alloy of the present embodiment include AB₅ type representing a hexagonal CaCu₅ type crystal structure, AB₂ type representing a hexagonal MgZn₂ type or a cubic MgCu₂ type crystal structure, AB type representing a cubic CsCl type crystal structure, A₂B type representing a hexagonal Mg₂Ni type crystal structure, a solid solution type representing a body-centered cubic structure, and AB₃ type, A₂B₇ type, and A₅B₁₉ type that are a combination of the crystal structures of the AB₅ type and the AB₂ type. The hydrogen storage alloy of the present embodiment may have one type among the above crystal structures, or may have a plurality of, i.e., two or more crystal structures.

Examples of the AB₅ type hydrogen storage alloy include LaNi₅, CaCu₅, and MmNi₅. Examples of the AB₂ type hydrogen storage alloy include MgZn₂, ZrNi₂, and ZrCr₂. Examples of the AB type hydrogen storage alloy include TiFe and TiCo. Examples of the A₂B type hydrogen storage alloy include Mg₂Ni and Mg₂Cu. Examples of the solid solution type hydrogen storage alloy include Ti-V, V-Nb, and Ti-Cr. Examples of the AB₃ type hydrogen storage alloy include LaNi₃. Examples of the A₂B₇ type hydrogen storage alloy may include La₂Ni₇. Examples of the A₅B₁₉ type hydrogen storage alloy include La₅Co₁₉ and Pr₅Co₁₉. In each of the above crystal structures, a part of the metals may be substituted with another one type or a plurality of types of metals or elements.

The hydrogen storage alloy of the present embodiment preferably includes a hydrogen storage alloy whose main phase has a crystal structure of A₂B₇ type. The hydrogen storage alloy of the present embodiment may be composed of an A₂B₇ type hydrogen storage alloy. The A₂B₇ type hydrogen storage alloy has a crystal structure in which the crystal structure of the AB₂ type hydrogen storage alloy (so-called AB₂ type subunit) and the crystal structure of the AB₅ type hydrogen storage alloy (so-called AB₅ type subunit) are stacked, and therefore, it is considered that crystals are difficult to break and the durability is excellent. Moreover, since the crystal lattice system is increased, it is expected that hydrogen easily enters so that the hydrogen storage capacity is improved, that is, the capacity is improved. It should be noted that "main phase has a crystal structure of A₂B₇ type" means that the ratio of the A₂B₇ type crystal structure in the hydrogen storage alloy is more than 50%.

The reverse current absorber of the present embodiment may include metal particles containing Ni as a main component. **In** this case, the metal particles are in contact with the hydrogen storage alloy. The metal particles have a function of a binder that binds the hydrogen storage alloys dispersed in the reverse current absorber to each other or binds the hydrogen storage alloy to the substrate. By binding the hydrogen storage alloys to each other by the metal particles, the surface area of the hydrogen storage alloy is improved, and the activity as a reverse current absorber is improved. It should be noted that the metal particles are those as described above, and therefore, the description thereof is not herein repeated.

The surface of the hydrogen storage alloy may be oxidized. It is considered that oxidation of the surface of the hydrogen storage alloy suppresses an unintended reaction between the hydrogen storage alloy and an electrolyte solution. In this case, the reverse current absorber may be composed of the hydrogen storage alloy with its surface oxidized.

A method for oxidizing the surface of the hydrogen storage alloy may be, for example, a method by which the hydrogen storage alloy is exposed to air so as to be oxidized with oxygen in the air, or a method by which the hydrogen storage alloy is brought into contact with an oxide such as hydrogen peroxide so as to be oxidized. In either method, it is preferable to carry out the oxidation while cooling the hydrogen storage alloy, in order to suppress excessive heat generation from the hydrogen storage alloy. Specifically, it is preferable to carry out the oxidation while cooling the hydrogen storage alloy by pouring water to the hydrogen storage alloy, or placing the hydrogen storage alloy in water or placing the hydrogen storage alloy in an aqueous solution of an oxide such as hydrogen peroxide and carrying out the oxidation.

Before the surface of the hydrogen storage alloy is oxidized, the hydrogen storage alloy may be treated with an alkaline substance. In the present embodiment, the treatment with an alkaline substance refers to treatment with an alkaline aqueous solution in which an alkali metal hydroxide is dissolved. The treatment with an alkaline substance is preferably treatment with a first alkaline aqueous solution in which an alkali metal hydroxide is dissolved, and subsequent treatment with a second alkaline aqueous solution in which an alkali metal hydroxide is dissolved.

By treating the hydrogen storage alloy with the first alkaline aqueous solution, La or the like having high solubility in an alkaline aqueous solution is eluted from the surface of the hydrogen storage alloy. Therefore, on the surface of the hydrogen storage alloy after being treated with the first alkaline aqueous solution, Ni or the like having low solubility in an alkaline aqueous solution is concentrated.

Examples of the alkali metal hydroxide contained in the first alkaline aqueous solution include lithium hydroxide, sodium hydroxide, potassium hydroxide, and the like. The first alkaline aqueous solution is preferably a strong base, and the alkali metal hydroxide contained in the first alkaline aqueous solution is preferably sodium hydroxide. The concentration of the alkali metal hydroxide contained in the first alkaline aqueous solution is, for example, 10% by mass or more and 60% by mass or less.

In the treatment of the hydrogen storage alloy with the first alkaline aqueous solution, it is preferable to immerse the hydrogen storage alloy in the first alkaline aqueous solution. Moreover, the treatment is preferably performed with stirring and heating. The heating temperature may be, for example, 50°C or more and 150°C or less. The heating time may be set as appropriate depending on the concentration of the first alkaline aqueous solution and the heating temperature, and may be, for example, 0.1 hour or more and 10 hours or less.

A relationship in amount between the hydrogen storage alloy and the first alkaline aqueous solution may be, for example, 1:0.5 to 1:100 by mass ratio. If the amount of the first alkaline aqueous solution is small, Ni or the like may not be sufficiently concentrated on the surface of the hydrogen storage alloy. A large amount of the first alkaline aqueous solution is not preferable from the viewpoint of cost.

Subsequently, the hydrogen storage alloy after being treated with the first alkaline aqueous solution may further be treated with the second alkaline aqueous solution in which an alkali metal hydroxide is dissolved.

The hydrogen storage alloy before being treated with the first alkaline aqueous solution may be separated, for example, by filtration, centrifugation, or the like, or may be separated after being treated with the first alkaline aqueous solution. Moreover, the hydrogen storage alloy may be treated with the first alkaline aqueous solution, together with the substrate, the Raney nickel particles (Raney alloy), and the metal particles (the raw material for the metal particles). The treatment of the hydrogen storage alloy with the second alkaline aqueous may be performed, for example, by immersing the hydrogen storage alloy in the second alkaline aqueous solution, or pouring the second alkaline aqueous solution to the hydrogen storage alloy. The treatment of the hydrogen storage alloy with the second alkaline aqueous solution may be performed by pouring the second alkaline aqueous solution to the hydrogen storage alloy subsequently to or during the separation of the hydrogen storage alloy. The hydrogen storage alloy may be treated with the second alkaline aqueous solution, together with the substrate, the Raney nickel particles (Raney alloy), and the metal particles (the raw material for the metal particles).

Examples of the alkali metal hydroxide contained in the second alkaline aqueous solution include lithium hydroxide, sodium hydroxide, potassium hydroxide, and the like. The alkali metal hydroxide contained in the second alkaline aqueous solution is preferably sodium hydroxide.

Moreover, the concentration C₁ of the alkali metal hydroxide in the first alkaline aqueous solution and the concentration C₂ of the alkali metal hydroxide in the second alkaline aqueous solution preferably satisfy a relationship: C₁ > C₂. Since an alkaline aqueous solution having a low concentration has low viscosity, it is considered that the treatment with the second alkaline aqueous solution proceeds smoothly under the condition satisfying the relationship: C₁ > C₂. The concentration of the alkali metal hydroxide in the second alkaline aqueous solution may be, for example, 0.01% by mass or more and 10% by mass or less.

From the viewpoint of manufacturing cost and the like, the treatment of the hydrogen storage alloy with the second alkaline aqueous solution is preferably performed under a lower temperature condition than the treatment of the hydrogen storage alloy with the first alkaline aqueous solution. The treatment temperature of the hydrogen storage alloy with the second alkaline aqueous solution may be, for example, 0 to 100°C. The treatment temperature of the hydrogen storage alloy with the second alkaline aqueous solution may be defined on the basis of the temperature of the environment in which the hydrogen storage alloy is present, or may be defined on the basis of the temperature of the second alkaline aqueous solution.

A relationship in amount between the hydrogen storage alloy and the second alkaline aqueous solution may be, for example, 1:0.5 to 1:100 by mass ratio. If the amount of the second alkaline aqueous solution is small, a hydroxide of La or the like may be removed insufficiently. A large amount of the second alkaline aqueous solution is not preferable from the viewpoint of cost.

Moreover, subsequently to the treatment with the second alkaline aqueous solution, the hydrogen storage alloy may be washed with water. By performing washing with water, the second alkaline aqueous solution adhering to the surface of the hydrogen storage alloy can be removed. A relationship in amount between the hydrogen storage alloy and water for washing with water may be 1: 1 to 1:50 by mass ratio. It should be noted that the washing of the hydrogen storage alloy with water may be performed in the air to serve as a method for oxidizing the surface of the hydrogen storage alloy.

The hydrogen storage alloy is, for example, in a powder form. The average particle size of the hydrogen storage alloy is preferably larger than the average particle size of the metal particles. The average particle size of the hydrogen storage alloy is, for example, 5 µm or more and 150 µm or less. The average particle size of the hydrogen storage alloy is preferably 8 µm or more and 110 µm or less.

### <Method for Manufacturing Water Electrolysis Cathode>

A method for manufacturing a water electrolysis cathode of the present embodiment includes at least (a) a catalyst portion forming step of forming a catalyst portion, and (b) a reverse current absorber forming step of forming a reverse current absorber. Manufacturing methods for respective forms are illustrated one by one in the following. However, the method for manufacturing the water electrolysis cathode of the present embodiment is not limited to them.

### <<First Form>>

### ((a) Catalyst Portion Forming Step)

The catalyst portion forming step is not particularly limited. For example, it may be formed by thermal spraying of a raw material for the catalyst onto a first substrate. Examples of the thermal spraying method include a plasma spraying method. Thermal spraying conditions are not particularly limited. The thermal spraying conditions may be changed as appropriate depending on the raw material for the catalyst, the substrate, and the like. It should be noted that the raw material for the catalyst and the substrate are those as described above.

For example, it may be formed by coating the first substrate with a first slurry obtained by mixing a raw material for the catalyst and a solvent (hereinafter also referred to as coating method). Examples of the solvent include water, N-methyl-2-pyrrolidone (NMP), N-ethyl-2-pyrrolidone (NEP), and the like. The first slurry may further include a thickening agent. Examples of the thickening agent include carboxymethylcellulose (CMC), polytetrafluoroethylene (PTFE), polyvinylidene fluoride (PVDF), and the like.

A surface of the first substrate may be coated with the first slurry by an arbitrary coating apparatus. The coating with the first slurry may be performed using a known coating apparatus such as die coater, roll coater, knife coater, blade coater, bar coater, spray coater, screen printer, or the like, or may be performed, for example, by immersing the first substrate in the first slurry. The whole of the surface of the first substrate may be coated with the first slurry, or a part of the surface of the first substrate may be coated with the first slurry. When the first substrate is in a sheet shape, one side or both sides of the first substrate may be coated with the first slurry. When the first substrate is a porous substrate, the first substrate coated with the first slurry may be pressed, for example, to cause the pores in the first substrate to be impregnated with the first slurry. When the first substrate is a porous substrate, the first slurry remaining on the surface of the first substrate without impregnating the pores may be scraped off with a spatula or the like.

The catalyst portion forming step may further include a catalyst portion drying step of drying the first slurry with which the first substrate is coated. For example, the first slurry is dried with a hot air drying oven, an infrared dryer, a hot plate, or the like. The drying temperature and the drying time may be adjusted as appropriate.

The catalyst portion forming step may further include a catalyst portion firing step of firing (heat-treating) the first substrate (catalyst portion) including the first slurry after the coating. The catalyst portion firing step is preferably performed after the catalyst portion drying step. In this case, an alkali treatment step is preferably performed after the catalyst portion firing step. The firing temperature may be, for example, 600°C or more and 900°C or less. The firing time may be, for example, 1 hour or more and 24 hours or less.

The first substrate (catalyst portion) after the plasma spraying or the first substrate (catalyst portion) including the first slurry after the coating may be pressed. The thickness of the first substrate (catalyst portion) is adjusted by pressing. Moreover, when the catalyst portion includes Raney nickel particles and metal particles, the pressing improves the contact area where the Raney nickel particles and the metal particles (Raney alloy and the raw material for the metal particles) are in contact with each other. The pressure may be adjusted as appropriate depending on a desired thickness of the first substrate (catalyst portion). It should be noted that the pressing of the first substrate may be performed at any timing.

The catalyst portion may be the one in which a catalyst layer containing a catalyst is formed on a surface of the first substrate, or may be the one in which a catalyst is dispersed in the first substrate. In the case where the catalyst layer is formed, the catalyst layer is at least required to be formed on at least one of the front and rear surfaces of the first substrate, and may be formed on both the front and rear surfaces of the first substrate.

For forming the catalyst portion in the form in which the catalyst is dispersed in the first substrate, it is preferable to use a first substrate with a low weight per unit area and a high-viscosity (high-concentration) first slurry. Use of the first substrate and the first slurry as described above allows the first slurry to easily penetrate into the first substrate. Reasons for this are considered to be the following. That is, the lower the weight per unit area, the higher the porosity of the substrate. The higher the porosity of the substrate, the larger the amount of the slurry carried therein (the amount of the catalyst portion carried therein), and accordingly, higher activity is expected. Moreover, the higher the viscosity (concentration) of the slurry, the higher the concentration of the catalyst portion in the slurry, which makes it easier for the Raney nickel particles and the metal particles to contact each other, and accordingly, improvement in the durability is expected. Furthermore, use of the the substrate with a low weight per unit area enables the high porosity to be maintained in the water electrolysis cathode even when the high-viscosity slurry penetrates therein, and accordingly, high activity is expected. It should be noted that "low weight per unit area" refers to, for example, 100 g/m² or more and 600 g/m² or less, preferably 200 g/m² or more and 400 g/m² or less. "High viscosity" refers to, for example, the fact that the proportion of the solvent in the first slurry is 10% by mass or more and 50% by mass or less, preferably 20% by mass or more and 45% by mass or less.

### ((b) Reverse Current Absorber Forming Step)

The reverse current absorber forming step includes a hydrogen storage alloy coating step of coating a second substrate with a second slurry obtained by mixing a hydrogen storage alloy containing Al and a solvent.

The hydrogen storage alloy containing Al, the substrate, and the solvent are those as described above. The amount of the hydrogen storage alloy containing Al is not particularly limited, and may be set as appropriate. The second slurry may further include a thickening agent. The thickening agent is the one as described above. It should be noted that the same substrate may be used as the first substrate and the second substrate, or different substrates may be used as them. The first substrate and the second substrate are preferably the same substrate.

**In** the hydrogen storage alloy coating step, a surface of the second substrate may be coated with the second slurry by an arbitrary coating apparatus. The coating with the second slurry may be performed using a known coating apparatus such as die coater, roll coater, knife coater, blade coater, bar coater, spray coater, screen printer, or the like, or may be performed, for example, by immersing the second substrate in the second slurry. The whole of the surface of the second substrate may be coated with the second slurry, or a part of the surface of the second substrate may be coated with the second slurry. When the second substrate is in a sheet shape, one side or both sides of the second substrate may be coated with the second slurry. When the second substrate is a porous substrate, the second substrate coated with the second slurry may be pressed, for example, to cause the pores in the second substrate to be impregnated with the second slurry. When the second substrate is a porous substrate, the first slurry remaining on the surface of the second substrate without impregnating the pores may be scraped off with a spatula or the like.

The reverse current absorber forming step may further include a reverse current absorber drying step of drying the second substrate including the second slurry (reverse current absorber) after the hydrogen storage alloy coating step. A method for drying is the one as described above. The drying temperature and the drying time may be adjusted as appropriate.

The reverse current absorber forming step may further include a reverse current absorber firing step of firing (heat-treating) the second substrate including the second slurry (reverse current absorber). The reverse current absorber firing step is preferably performed after the reverse current absorber drying step. The firing temperature may be, for example, 600°C or more and 900°C or less. The firing time may be, for example, 1 hour or more and 24 hours or less.

The reverse current absorber forming step may further include a pressing step of pressing the second substrate including the second slurry (reverse current absorber). The thickness of the second substrate including the second slurry (reverse current absorber) is adjusted by pressing. The pressure may be adjusted as appropriate depending on a desired thickness of the second substrate including the second slurry (reverse current absorber). It should be noted that the second substrate may be pressed before being coated with the second slurry, or the second substrate including the second slurry (reverse current absorber) may be pressed before the reverse current absorber firing step.

The second slurry may include metal particles. The reverse current absorber may be the one in which a reverse current absorber layer containing a hydrogen storage alloy is formed on a surface of the second substrate, or may be the one in which a hydrogen storage alloy is dispersed in the second substrate. In the case where the reverse current absorber layer is formed, the reverse current absorber layer is at least required to be formed on at least one of the front and rear surfaces of the second substrate, and may be formed on both the front and rear surfaces of the second substrate. For forming the reverse current absorber in the form in which the hydrogen storage alloy is dispersed in the second substrate, it is preferable to use a second substrate with a low weight per unit area and a high-viscosity second slurry.

### <<Second Form>>

The water electrolysis cathode in the second form is manufactured by the same method as the one for the first form, except that a catalyst layer (catalyst portion) is formed on one of the front and rear surfaces of a substrate, and a reverse current absorber is formed on the other surface thereof. In the second form, it is not necessary to use separate substrates like those of the first form. There is no particular limitation on the order of forming the catalyst layer and the reverse current absorber.

### <<Third Form>>

The water electrolysis cathode in the third form is manufactured by the same method as the one for the first form, except that a substrate is coated with a slurry mixture including: a raw material for a catalyst; and a hydrogen storage alloy containing Al. For the third form, it is not necessary to separately prepare the first slurry and the second slurry like those of the first form. Therefore, for the third form, the catalyst portion and the reverse current absorber are formed simultaneously. Thus, for the third form, the combination of the above-described (a) catalyst portion forming step and (b) reverse current absorber forming step may be referred to as "water electrolysis cathode forming step." It should be noted that for manufacturing the water electrolysis cathode in the third form, the substrate is coated with the slurry, and therefore, the catalyst portion is formed by the coating method.

### <<Fourth Form>>

The water electrolysis cathode in the fourth form is manufactured by the same method as that for the first form, except that a catalyst portion in the form in which a catalyst is dispersed in a substrate is formed, and thereafter a reverse current absorber is formed on at least one of the front and rear surfaces of the catalyst portion. The reverse current absorber may be formed on only one of the front and rear surfaces of the catalyst portion, or the reverse current absorber may be formed on both the front and rear surfaces of the catalyst portion. It should be noted that for manufacturing the water electrolysis cathode in the fourth form, the substrate is coated with the slurry, and therefore, the catalyst portion is formed by the coating method.

It should be noted that the method for manufacturing Raney nickel particles, the method for manufacturing a catalyst including Raney nickel particles and metal particles, and the method for oxidizing the surface of the hydrogen storage alloy as described above may be included in one step of the method for manufacturing the water electrolysis cathode. For example, when Raney nickel particles are used as a catalyst, a slurry obtained by mixing a Raney alloy and a solvent is used to coat a substrate, and then dried. After the drying, the substrate and a layer formed by drying the slurry may be treated with an alkaline substance to elute Al from the Raney alloy, thereby forming the catalyst portion. For example, when Raney nickel particles and metal particles are used as a catalyst, a slurry obtained by mixing a Raney alloy, a raw material for metal particles, and a solvent is used to coat a substrate, and then dried. After the drying, the substrate and a layer formed by drying the slurry are sintered. After the sintering, the substrate and a layer formed by sintering the slurry may be treated with an alkaline substance to elute Al from the Raney alloy, thereby forming the catalyst portion.

### EXAMPLES

### <Raw Materials>

Materials used in the present example are as follows.

### <<Substrate>>

A1: porous metal body made of Ni (manufactured by Sumitomo Electric Industries, Ltd., CELMET (registered trademark), product number #8) (size: 50 mm × 50 mm, thickness: 1.2 mm)
A2: porous metal body made of Ni (manufactured by NanoMaterials development experts) (size: 50 mm × 50 mm, thickness: 4 mm)

### <<Hydrogen Storage Alloy>>

B1: (La_{0.9}Sm_{0.07}Y_{0.03})_{0.77}Mg_{0.23}Ni_{3.305}Al_{0.09}Cr_{0.005} (average particle size: 20 to 25 µm)
B2: (La_{0.975}Ce_{0.02}Y_{0.005})_{0.75}Mg_{0.25}Ni_{3.305}Al_{0.09}Cr_{0.005} (average particle size: 20 to 25 µm)
B3: LaNi₅ (average particle size: 20 µm)

### <<Raney Alloy>>

C1: Nickel-aluminum alloy with a composition formula of Al₃Ni₂ (manufactured by Japan Metals & Chemicals Co., Ltd., average particle size: 23 µm)
C2: Nickel-aluminum-iron alloy with a composition formula of Al₃Ni_{1.95}Fe_{0.05} (manufactured by Japan Metals & Chemicals Co., Ltd., average particle size: 16 µm)
C3: Nickel-aluminum-iron alloy with a composition formula of Al₃Ni_{1.95}Fe_{0.05} (manufactured by Japan Metals & Chemicals Co., Ltd., average particle size: 23 µm)
C4: Nickel-aluminum-iron alloy with a composition formula of Al₃Ni_{1.95}Fe_{0.05} (manufactured by Japan Metals & Chemicals Co., Ltd., average particle size: 38 µm)
C5: Nickel-aluminum-iron alloy with a composition formula of Al₃Ni_{1.95}Fe_{0.05} (manufactured by Japan Metals & Chemicals Co., Ltd., average particle size: 85 µm)

### <<Raw Material for Metal Particles>>

D1: Nickel particles (manufactured by Kojundo Chemical Laboratory Co., Ltd., Ni Nickel (NIE10PB)) (average particle size: 2 to 3 µm)
D2: Nickel particles (manufactured by Kojundo Chemical Laboratory Co., Ltd., NIE11PB) (average particle size: 3 to 5 µm)

### <<Others>>

Thickening agent: CMC (manufactured by DKS Co., Ltd., CELLOGEN EP)
Solvent: Water

### <Reverse Current Absorber>

(E1) A slurry was prepared by mixing Hydrogen Storage Alloy B1, CMC, and water.

Both surfaces of Substrate A1 were coated with the slurry by a die coater. After coating, the slurry remaining on the surfaces of Substrate A1 was scraped off with a spatula.

Substrate A1 including the slurry was dried at 80°C for 60 minutes.

Substrate A1 after being dried was fired at 700°C for 2 hours.

Substrate A1 after being fired was immersed in a 14 mol/L sodium hydroxide aqueous solution at 125°C for 3 hours. Then, Substrate A1 was washed with water and oxidized using a hydrogen peroxide solution to thereby produce a reverse current absorber E1. The obtained reverse current absorber is the one in which the hydrogen storage alloy is dispersed in the substrate.

(E2) A reverse current absorber E2 was produced by the same method as the one for the reverse current absorber E1 except that Hydrogen Storage Alloy B2 was used.

(E3) A reverse current absorber E3 was produced by the same method as the one for the reverse current absorber E1 except that Hydrogen Storage Alloy B3 was used.

### <Water Electrolysis Electrode>

### (No. 1)

Raney Alloy C1, which is a raw material for thermal spraying, was plasma-sprayed on Substrate A2 to obtain a water electrolysis electrode of No. 1.

### (No. 2)

A slurry was prepared by mixing Raney Alloy C1 and water. Both surfaces of Substrate A1 were coated with the slurry by a die coater. After coating, the slurry remaining on the surfaces of Substrate A1 was scraped off with a spatula. Substrate A1 including the slurry was dried at 80°C for 60 minutes. Substrate A1 after being dried was fired at 700°C for 2 hours. Substrate A1 after being fired was immersed in a 14 mol/L sodium hydroxide aqueous solution at 125°C for 3 hours. Then, Substrate A1 was washed with water and oxidized using a hydrogen peroxide solution to produce a water electrolysis electrode of No. 2.

### (No. 3)

The surface of the water electrolysis electrode of No. 1 on which the catalyst portion was formed was coated, by a die coater, with a slurry prepared by mixing Hydrogen Storage Alloy B1, CMC, and water, and dried at 80°C for 60 minutes to obtain a water electrolysis electrode of No. 3. It should be noted that Hydrogen Storage Alloy B1 was the one that was immersed in advance in a 14 mol/L sodium hydroxide aqueous solution at 110°C for 3 hours, then washed with water, and oxidized using a hydrogen peroxide solution.

### <Example 1>

A reverse current absorber composed of a hydrogen storage alloy and placed in a water electrolysis apparatus gradually absorbs hydrogen generated during continuous operation, so that the hydrogen storage alloy becomes completely filled with hydrogen and, when the operation is stopped, the hydrogen storage alloy absorbs reverse current and accordingly releases a part of the hydrogen filling the hydrogen storage alloy during the operation.

Therefore, it is considered that the reverse current absorber composed of the hydrogen storage alloy and placed in the water electrolysis apparatus repeats a state of being fully filled with hydrogen at a high temperature of 50°C or more and a state of having released a small amount of hydrogen. It should be noted that the above temperature is a common operating temperature of the water electrolysis apparatus.

**In** order to evaluate the performance of the obtained reverse current absorbers, a durability test was performed in which a state of being fully (100%) filled with hydrogen at 50°C and a state of being filled with hydrogen to 90% were repeated, to measure the hydrogen release capacity of the reverse current absorber before and after the durability test. Specifically, a 7 mol/L potassium hydroxide aqueous solution was used as an electrolyte solution, and each of the reverse current absorbers E1 to E3, and nickel hydroxide to serve as a counter electrode were immersed in the electrolyte solution. Then, the reverse current absorber was filled with hydrogen by applying charging current at a rate of 1/3C for a time taken for the reverse current absorber to be filled with hydrogen to 100%. After being filled, the reverse current absorber was caused to release hydrogen by applying discharging current for a time taken for the reverse current absorber to be filled with hydrogen to 90%. The filling with hydrogen and the release of hydrogen were repeated 100 times, and the hydrogen release capacity at the first time and the 100th time was measured. For measuring the hydrogen release capacity, initially, electricity was applied at a rate of 1/3C until it is filled with hydrogen to 100%. After that, discharging was performed at a rate of 1/3C until the potential of nickel hydroxide, which is a counter electrode for the reverse current absorber, reached 1.0 V, and the hydrogen release capacity was calculated from the time taken for the discharging. The results are shown in Table 1.

**[Table 1]**

| number of cycles | capacity (mAh/g) | | |
|---|---|---|---|
| | E1 | E2 | E3 |
| 0 | 204 | 166 | 141 |
| 100 | 214 | 166 | 55 |

As shown in Table 1, the hydrogen release capacity of the reverse current absorbers E1 and E2 had not changed significantly even at the 100th cycle. In contrast, the hydrogen release capacity of the reverse current absorber E3 had decreased significantly at the 100th cycle. Therefore, it is considered that degradation due to reverse current was suppressed in the reverse current absorbers E1 and E2, as compared with the reverse current absorber E3. Moreover, since the reverse current absorbers E1 and E2 contain Al unlike the reverse current absorber E3, it is also considered that a strong conduction path was formed so that the reverse current absorbers were maintained without being broken.

### <Example 2>

In order to evaluate the performance affected by reverse current, a durability test was performed and the electrolysis voltage was measured before and after the durability test. The electrolysis voltage is a minimum voltage required to constantly and continuously generate electrolysis products during electrolysis. Generally, the larger the current, the larger the amount of generated hydrogen; and the smaller the voltage, the smaller the energy loss, and therefore, it is preferable to be able to perform electrolysis with a large current and a low voltage. In the present example, the fact that the electrolysis voltage after the durability test is lower than the electrolysis voltage before the durability test means that activation of the electrode has been promoted by application of electricity.

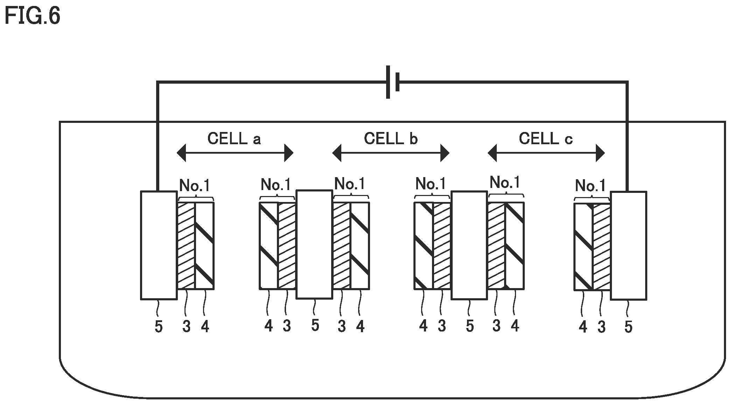

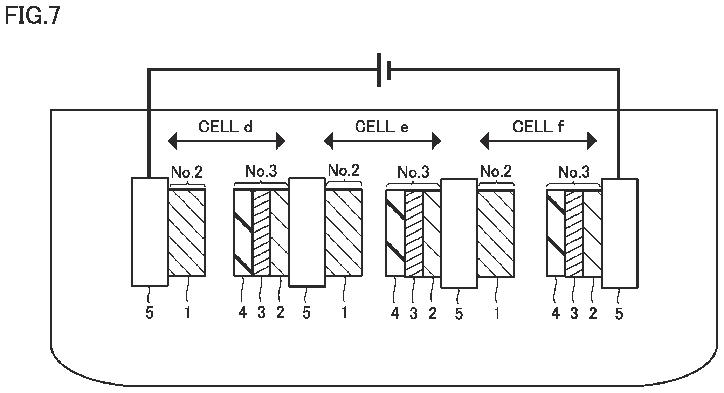

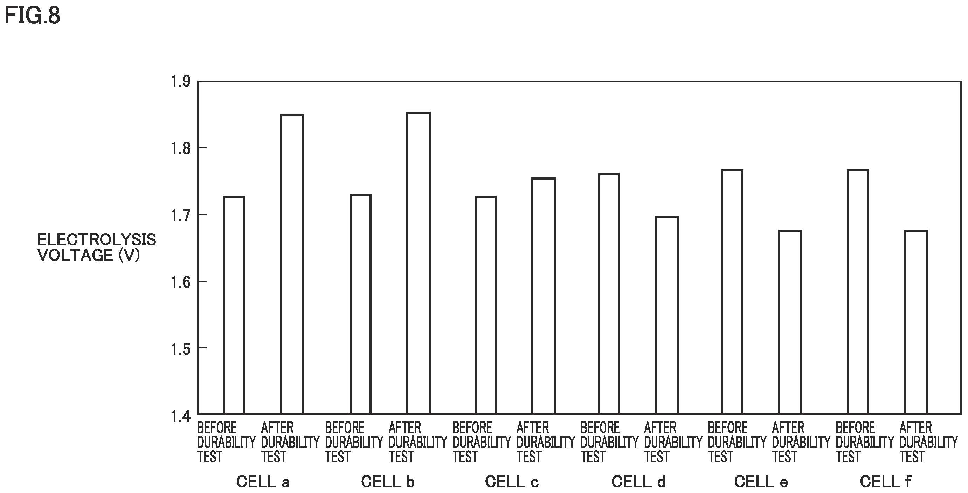

Specifically, as shown in Figs. 6 and 7, a bipolar type electrolytic cell was formed by connecting electrodes of any of Nos. 1 to 3 in series. A nickel plate was used as a current collector plate 5 of the electrolytic cell. While supplying a 7 mol/L potassium hydroxide aqueous solution to the electrolytic cell with a pump, the water temperature was raised to 80°C, electrolysis at 440 mA/cm² and stoppage of the electrolysis were repeated 500 times, and the electrolysis voltage at the first time and the 500th time was measured. The results are shown in Table 2 and Fig. 8. It should be noted that in Fig. 6 and Fig. 7, the water electrolysis electrode placed on the right side of the current collector plate 5 is an anode, and the water electrolysis electrode placed on the left side is a cathode.

**[Table 2]**

| Cell | electrolysis voltage before test (V) | electrolysis voltage after test (V) |
|---|---|---|
| a | 1.72 | 1.84 |
| b | 1.73 | 1.85 |
| c | 1.72 | 1.75 |
| d | 1.76 | 1.69 |
| e | 1.78 | 1.67 |
| f | 1.78 | 1.68 |

In the apparatus shown in Fig. 6, in all of Cells a to c, the electrolysis voltage after the durability test was higher than the electrolysis voltage before the durability test. This is considered to be caused by oxidation of the water electrolysis cathode, resulting in degradation in the performance. In contrast, in the apparatus shown in Fig. 7, in all of Cells d to f, the electrolysis voltage after the durability test was not higher than the electrolysis voltage before the durability test. This is considered to be caused by the fact that this apparatus includes the reverse current absorber and the hydrogen storage alloy contained in the reverse current absorber reacted, so that the cathode was not oxidized and the performance was maintained. The reason for the decrease of the voltage after the durability test is considered to be decrease of the resistance due to activation by application of electricity.

### <Reference Test 1>

In order to evaluate the influence of the average particle size of the Raney alloy (Raney nickel particles) on a water electrolysis cathode, a potential cycling durability test was performed. Initially, the following water electrolysis electrodes were produced.

### (No. 11)

A slurry was prepared by mixing Raney Alloy C2, Raw Material D 1 for metal particles, CMC, and water. The mass ratio between Raney Alloy C2 and Raw Material D1 for metal particles was 52:48. The proportion of the solvent in the slurry was 24% by mass or more and 40% by mass or less.

Both surfaces of Substrate A1 were coated with the slurry by a die coater. After coating, the slurry remaining on the surfaces of Substrate A1 was scraped off with a spatula.

Substrate A1 including the slurry was dried at 80°C for 60 minutes.

Substrate A1 after being dried was fired at 700°C for 2 hours.

Substrate A1 after being fired was immersed in a 14 mol/L sodium hydroxide aqueous solution at 125°C for 3 hours. Then, Substrate A1 was washed with water and oxidized using a hydrogen peroxide solution to produce a water electrolysis electrode of No. 11.

### (No. 12)

A water electrolysis electrode of No. 12 was produced by the same method as the one for No. 11 except that Raney Alloy C3 was used.

### (No. 13)

A water electrolysis electrode of No. 13 was produced by the same method as that for No. 11 except that Raney Alloy C4 was used.

### (No. 14)

A water electrolysis electrode of No. 14 was produced by the same method as that for No. 11 except that Raney Alloy C5 was used.

### <Potential Cycling Durability Test>

The potential cycling durability test was performed in the following manner. A 7 M potassium hydroxide aqueous solution was used as an electrolyte solution, and a nickel mesh to serve as a counter electrode and the water electrolysis electrode of each of Nos. 11 to 14 were immersed in the electrolyte solution. A mercury-mercuric oxide electrode was used as a reference electrode and was connected to the electrolyte solution using a liquid junction. Before and after the potential cycling durability test, the potential of the working electrode was swept at 1 mV/s relative to the reference electrode, and hydrogen evolution current relative to the electrode potential was measured. The value of current when the cathode potential was -0.15 V (vs. reversible hydrogen electrode) was read and used as an index of hydrogen evolution activity. As the potential cycling durability test, a control process of holding at -0.1 V (vs. reversible hydrogen electrode) for 1 minute and then holding at 0.4 V (vs. reversible hydrogen electrode) for 1 minute was repeated 1000 times.

### (Current Density)

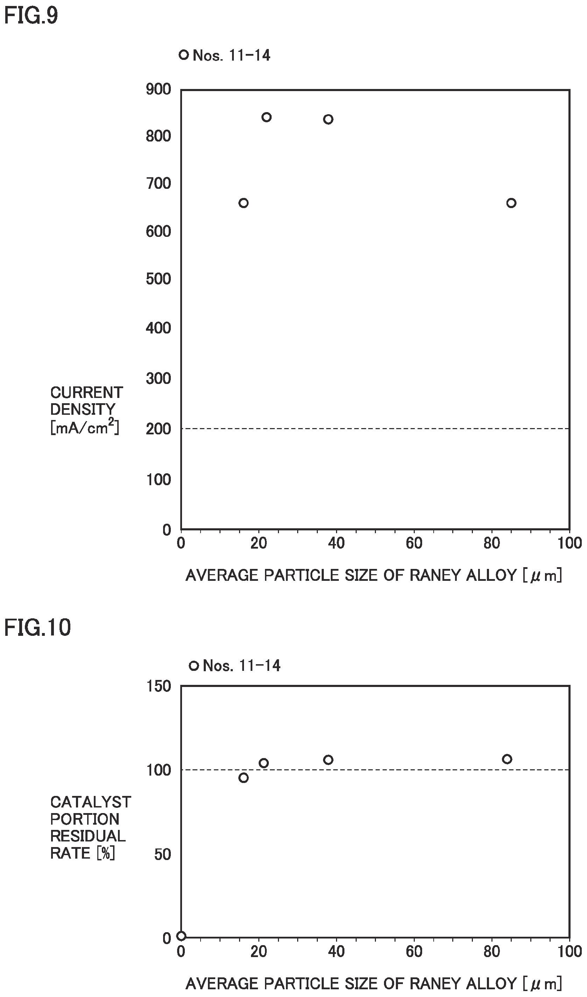

The current density before the potential cycling durability test was measured. The results are shown in Table 3 and Fig. 9. The water electrolysis electrode with a current density of 200 mA/cm² or more was regarded as a water electrolysis electrode exhibiting good activity.

### (Catalyst Portion Residual Rate)

The catalyst portion residual rate after completion of the potential cycling durability test was calculated based on the following Formula (i), where X (mg/cm²) is the weight per unit area of the water electrolysis electrode before the potential cycling durability test, and Y (mg/cm²) is the weight per unit area of the water electrolysis electrode after completion of the potential cycling durability test. The results are shown in Table 3 and Fig. 10. The fact that the catalyst portion residual rate is less than 100% means that the catalyst portion has fallen off, that is, the durability has been deteriorated. The fact that the catalyst portion residual rate is 100% means that the catalyst portion has not been reduced after the potential cycling durability test, relative to the catalyst portion before the test, and the durability is excellent. It should be noted that if a part of the catalyst portion is oxidized by the potential cycling durability test, the catalyst portion residual rate may be 100% or more; however, the catalyst portion is maintained without falling off and the durability is not affected by this. $Catalyst portion residual rate = Y / X \times 100$ (i)

**[Table 3]**

| No. | current density before test (mA/cm²) | catalyst portion residual rate (%) |
|---|---|---|
| 11 | 659 | 95 |
| 12 | 849 | 103 |
| 13 | 836 | 105 |
| 14 | 661 | 105 |

As shown in Table 3 and Fig. 9, in Nos. 11 to 14, the current density before the potential cycling durability test was 200 mA/cm² or more. Moreover, in Nos. 12 and 13, the current density before completion of the potential cycling durability test was 800 mA/cm² or more.

Moreover, as shown in Table 3 and Fig. 10, in Nos. 12 to 14, the catalyst portion residual rate exceeded 100%. Thus, it is considered that a water electrolysis cathode exhibiting good activity and durability can be obtained by setting the average particle size of the Raney alloy (Raney nickel particles) within an appropriate range.

### <Reference Test 2>

In order to evaluate the influence of the average particle size of the raw material for metal particles (metal particles) on a water electrolysis cathode, a potential cycling durability test was performed. Initially, the following water electrolysis electrodes were produced. It should be noted that the test method is the same as that of Reference Test 1.

### (No. 15)

A water electrolysis electrode of No. 15 was produced by the same method as the one for No. 11 except that Raney Alloy C3 was used and Substrate A1 after being dried was pressed to have a thickness of 0.6 mm.

### (No. 16)

A water electrolysis electrode of No. 16 was produced by the same method as that for No. 15 except that Raw Material D2 for metal particles was used.

### (Current Density)

The current density before the potential cycling durability test and after completion of the potential cycling durability test was measured. The results are shown in Table 4. The water electrolysis electrode with a current density of 200 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 4.

**[Table 4]**

| No. | current density before test (mA/cm²) | current density after test (mA/cm²) | catalyst portion residual rate (%) |
|---|---|---|---|
| 15 | 849 | 336 | 103 |
| 16 | 585 | 7 | 3 |

As shown in Table 4, in No. 15, the current density before the potential cycling durability test and after completion of the potential cycling durability test was 200 mA/cm² or more. In contrast, in No. 16, while the current density before the potential cycling durability test was 200 mA/cm² or more, the current density after completion of the potential cycling durability test was significantly smaller than the one before the test.

Moreover, as shown in Table 4, in No. 15, the catalyst portion residual rate exceeded 100%. In contrast, in No. 16, the catalyst portion hardly remained. Thus, it is considered that a water electrolysis cathode exhibiting good activity and durability can be obtained by setting the average particle size of the raw material for metal particles (metal particles) within an appropriate range.

### [Aspects]

Technical ideas that can be seen from the above embodiment are further described in the following.

### (Aspect 1)

A water electrolysis cathode including:
a catalyst portion; and
a reverse current absorber electrically connected to the catalyst portion, wherein
the reverse current absorber contains a hydrogen storage alloy, and
the hydrogen storage alloy contains Al.

### (Aspect 2)

The water electrolysis cathode according to Aspect 1, wherein the hydrogen storage alloy further contains La and Ni.

### (Aspect 3)

The water electrolysis cathode according to Aspect 2, wherein the hydrogen storage alloy further contains Mg.

### (Aspect 4)

The water electrolysis cathode according to any one of Aspects 1 to 3, wherein a main phase of the hydrogen storage alloy has a crystal structure of A₂B₇ type.

### (Aspect 5)

The water electrolysis cathode according to any one of Aspects 1 to 4, wherein the hydrogen storage alloy is represented by a Formula (1):

(La₁₋ₐMₐ)_{1-b}Mg_{b}Ni_{c}Al_{d}Tₑ (1)

in the Formula (1), M is at least one element selected from Ce, Pr, Nd, Pm, Sm, Eu, Gd, Tb, Dy, Ho, Er, Tm, Yb, Lu, Ca, Sr, Sc, Y, Ti, Zr, and Hf, and T is at least one element selected from Mn, Co, Ti, V, Nb, W, Ta, Cr, Mo, Fe, Al, Ga, Zn, Sn, In, Cu, Si, Li, P, S, and B, and a, b, c, d, and e satisfy relationships: 0 ≤ a ≤ 0.1, 0 < b < 0.3, 2.5 ≤ c ≤ 4.7, 0 < d ≤ 0.1, and 0 ≤ e ≤ 0.01, respectively.

### (Aspect 6)

The water electrolysis cathode according to any one of Aspects 1 to 5, wherein the catalyst portion includes Raney nickel particles.

### (Aspect 7)

The water electrolysis cathode according to Aspect 6, wherein
the catalyst portion further includes metal particles containing Ni as a main component, and
the metal particles are in contact with the Raney nickel particles.

### (Aspect 8)

The water electrolysis cathode according to Aspect 7, wherein the hydrogen storage alloy is in contact with the metal particles.

### (Aspect 9)

The water electrolysis cathode according to Aspect 7 or 8, wherein
the metal particles further contain Al, and
a ratio of a total number of moles of Al to a total number of moles of Ni in the Raney nickel particles is larger than a ratio of a total number of moles of Al to a total number of moles of Ni in the metal particles.

### (Aspect 10)

A method for manufacturing a water electrolysis cathode, the method including:
a catalyst portion forming step of forming a catalyst portion; and
a reverse current absorber forming step of forming a reverse current absorber that contains a hydrogen storage alloy containing Al, wherein
the reverse current absorber forming step includes a hydrogen storage alloy coating step of coating a substrate with a slurry obtained by mixing the hydrogen storage alloy and a solvent.

The present embodiment and the present example are given by way of illustration in all respects. The present embodiment and the present example are not given by way of limitation. The technical scope of the present disclosure encompasses all variations equivalent in meaning and scope to the description in claims. For example, it is intended from the beginning that any features extracted from the present embodiment and the present example are combined in any manner.

### REFERENCE SIGNS LIST

1 catalyst portion; 2 reverse current absorber; 3 substrate; 4 catalyst layer; 5 current collector plate; 10 water electrolysis cathode.

## Claims

1. A water electrolysis cathode comprising:
a catalyst portion; and
a reverse current absorber electrically connected to the catalyst portion, wherein
the reverse current absorber contains a hydrogen storage alloy, and
the hydrogen storage alloy contains Al.

2. The water electrolysis cathode according to claim 1, wherein the hydrogen storage alloy further contains La and Ni.

3. The water electrolysis cathode according to claim 2, wherein the hydrogen storage alloy further contains Mg.

4. The water electrolysis cathode according to any one of claims 1 to 3, wherein a main phase of the hydrogen storage alloy has a crystal structure of A₂B₇ type.

5. The water electrolysis cathode according to any one of claims 1 to 4, wherein
the hydrogen storage alloy is represented by a Formula (1):
(La₁₋ₐMₐ)_{1-b}Mg_{b}Ni_{c}Al_{d}Tₑ (1)
in the Formula (1), M is at least one element selected from Ce, Pr, Nd, Pm, Sm, Eu, Gd, Tb, Dy, Ho, Er, Tm, Yb, Lu, Ca, Sr, Sc, Y, Ti, Zr, and Hf, and T is at least one element selected from Mn, Co, Ti, V, Nb, W, Ta, Cr, Mo, Fe, Al, Ga, Zn, Sn, In, Cu, Si, Li, P, S, and B, and a, b, c, d, and e satisfy relationships: 0 ≤ a ≤ 0.1, 0 < b < 0.3, 2.5 ≤ c ≤ 4.7, 0 < d ≤ 0.1, and 0 ≤ e ≤ 0.01, respectively.

6. The water electrolysis cathode according to any one of claims 1 to 5, wherein the catalyst portion includes Raney nickel particles.

7. The water electrolysis cathode according to claim 6, wherein
the catalyst portion further includes metal particles containing Ni as a main component, and
the metal particles are in contact with the Raney nickel particles.

8. The water electrolysis cathode according to claim 7, wherein the hydrogen storage alloy is in contact with the metal particles.

9. The water electrolysis cathode according to claim 7 or 8, wherein
the metal particles further contain Al, and
a ratio of a total number of moles of Al to a total number of moles of Ni in the Raney nickel particles is larger than a ratio of a total number of moles of Al to a total number of moles of Ni in the metal particles.

10. A method for manufacturing a water electrolysis cathode, the method comprising:
a catalyst portion forming step of forming a catalyst portion; and
a reverse current absorber forming step of forming a reverse current absorber that contains a hydrogen storage alloy containing Al, wherein
the reverse current absorber forming step includes a hydrogen storage alloy coating step of coating a substrate with a slurry obtained by mixing the hydrogen storage alloy and a solvent.
